# EUROPÄISCHE PATENTSCHRIFT

(11) **EP 1 442 813 B1**
(45) Veröffentlichungstag und Bekanntmachung des Hinweises auf die Patenterteilung: **11.04.2007**
(21) Anmeldenummer: 04100374.0
(22) Anmeldetag: 03.02.2004
(51) Int. Cl.: B23D 49/16

(54) **Pendelhubschalter für Stichsägen**
Switch for controlling the orbital movement of the saw blade in sabre saws
Commutateur pour commander le mouvement oscillant de la lame de scie dans des scies sauteuses

(30) Priorität: 03.02.2003 DE 10304157
(43) Veröffentlichungstag der Anmeldung: 04.08.2004
(73) Patentinhaber: HILTI Aktiengesellschaft, 9494 Schaan (LI)
(72) Erfinder: Baxivanelis, Konstantin, 86916, Kaufering (DE)
(74) Vertreter: Wildi, Roland

(56) Entgegenhaltungen:
- EP-A- 0 497 458
- DE-A- 3 543 764
- DE-A- 19 604 938
- US-A- 4 238 884
- US-A- 4 240 204

## Beschreibung

Die Erfindung betrifft eine Stichsäge gemäß dem Oberbegriff des Anspruchs 1 mit einer Hubstange, die im Betrieb eine Hubbewegung in Richtung einer Hubachse ausführt, und einer Pendelbewegungsanordnung, durch die die Hubbewegung mit einer quer zur Hubachse erfolgenden und in ihrer Grösse verstellbaren Pendelbewegung überlagerbar ist, wobei die Pendelbewegungsanordnung ein Wippelement aufweist, das im Betrieb um eine Wippachse hin- und herverschwenkt wird und dabei ein Druckelement entlang einer Bewegungsachse hin- und herbewegt, über das ein Pendelelement um eine Pendelachse in eine Bewegung versetzt werden kann, die eine wiederkehrende Auslenkung der Hubstange bewirkt. EP 0 497 458 offenbart eine solche Stichsäge.

Derartige Sägen werden auch als Pendelhubsägen bezeichnet. Die Pendelhubbewegung der Stichsäge erzeugt vor allem bei der Bearbeitung von Holz eine bessere Vorschubleistung. Bei der Bearbeitung von Metall hat die Pendelhubbewegung dagegen gewisse Nachteile. Aus diesem Grund wird bei vielen bekannten Sägen vorgesehen, dass die zusätzliche Pendelbewegung in ihrer Grösse verstellbar ist beziehungsweise ganz abgeschaltet werden kann.

EP 0 497 458 zeigt eine Stichsäge, bei der das Druckelement durch einen Stift gebildet ist, der axial verschiebbar in einer Verstellwelle gehalten ist. Die Verstellwelle ist über einen Einstellstift mit einem Schiebeschalter am Gehäuse verbunden. Um die Pendelbewegung zu verstellen beziehungsweise ganz abzustellen, kann die Verstellwelle mit dem darin lagemden Druckelement durch verschieben des Schiebeschalters verdreht werden. Dies hat zur Folge, dass das Druckelement schräg zur Bewegungsrichtung des Wippelementes ausgerichtet ist und über eine geringere Strecke durch das Wippelement bewegt wird. In dem Fall, dass das Druckelement soweit verdreht wird, dass seine Achse durch die Wippachse geht, ist die Pendelbewegung vollständig aufgehoben.

Eine derartige Vorgehensweise hat den Nachteil, dass sowohl das Wippelement als auch das Pendelelement relativ aufwendige, profilierte Anlegebereiche aufweisen müssen, die an die Schrägstellungen des Druckelementes angepasst sind. Ferner wirken bei Schrägstellung des Druckelementes Querkräfte, die nur bei entsprechend stabiler Ausführung der betreffenden Verbindungen und Bauteile der Stichsäge störungsfrei aufgenommen werden können. Zudem ist bei der bekannten Lösung die Montage wegen des entgegen derVorschubrichtung nach hinten ragenden Drehlagers der Verstellwelle relativ aufwendig.

DE 35 43 764 A1 zeigt eine elektrische Laubsäge mit einer Vorrichtung zur Regelung einer Schwingungsamplitude, die zusätzlich zu einer hin- und hergehenden Bewegung an einem Sägeblatt wirkt. Die Vorrichtung weist einen Stössel auf, mittels dem ein Hebel wiederkehrend verschwenkbar ist, der quer zur Hubrichtung auf das Sägeblatt einwirkt. Der Stössel selbst wird durch hin- und herschwingende Führungen angetrieben. Die Führungen bilden zusammen mit einem Exzenterstift eines Drehknopfes die den Stössel haltenden Lagermittel. Durch Verdrehen des Drehknopfes ist dabei die Position des Stössels gegenüber den Führungen beziehungsweise dem Hebel und somit auch die Schwingungsamplitude des Sägeblattes verstellbar.

Der vorliegenden Erfindung liegt die Aufgabe zugrunde, bei einer Stichsäge mit verstellbarem - und abschaltbarem Pendelhub die vorgenannten Nachteile zu vermeiden und eine sichere Verstellbarkeit der Pendelbewegung bei einfacher Montage zu gewährleisten.

Diese Aufgabe wird durch die Merkmalskombination des Anspruchs 1 gelöst. Weitere vorteilhaften Ausführungen der Erfindung sind den abhängigen Ansprüchen zu entnehmen.

Erfindungsgemäss wird die Aufgabe dadurch gelöst, dass das Druckelement in einem senkrecht zur Bewegungsachse linear verschiebbaren Lager gehalten ist. Dabei kann das Druckelement in mindestens zwei Positionen mit unterschiedlichen Abständen zur Wippachse bewegt werden. Die Ausrichtung des Druckelementes wird bei der Verschiebung im Wesentlichen beibehalten. Auf diese Weise liegt die Wirkungsrichtung der Kräfte, die vom Wippelement über das Druckelement auf das Pendelelement übertragen werden, in jeder Position des Druckelements sowohl in einem Schwenkraum, der durch das Wippelement aufgespannt wird, als auch in einem Schwenkraum, der durch das Pendelelement aufgespannt wird. Bei der Erzeugung der Pendelbewegung kann hierdurch die Entstehung von Querkräften, die an Gehäuse- oder Lagerschildteilen der Stichsäge wirken, zumindest weitestgehend vermieden werden. Folglich können relativ gering dimensionierte Verbindungen und tragende Teile verwendet werden, an denen die Pendelbewegungsanordnung gehalten ist. Ferner kann die Pendelbewegungsanordnung selbst einen relativ einfachen Aufbau aufweisen, der leicht montiert werden kann. Insgesamt kann auf diese Weise eine sichere Verstellbarkeit der Pendelbewegung bei geringen Herstellungskosten gewährleistet werden.

Vorteilhaft ist, dass das Druckelement in eine Position verbracht werden kann, in der die Bewegungsachse die Wippachse schneidet. Hierdurch ist es in einfacher Weise möglich, die Pendelbewegung durch Verschiebung des Druckstiftes vollständig abzuschalten.

Vorzugsweise erfolgt die axial bewegliche Lagerung des Druckelementes in einem Gleitelement, das selbst quer zur Wippachse und somit parallel zu einem Schwenkraum, der durch das Wippelement in dessen Bewegungsrichtung aufgespannt ist, verschiebbar gelagert ist. Durch Verwendung eines Gleitelementes ist eine störungsfreie und genaue Führung des Druckelementes in der Bewegungsrichtung des Wippelementes möglich. Auf diese Weise erreicht man ein zuverlässiges Umschalten zwischen den verschiedenen Positionen des Druckelementes und vermeidet das Auftreten von Querkräften.

Günstig ist, dass das Gleitelement zwischen einem Lagerschild und einem inneren Gehäuseteil der Stichsäge gelagert ist. Diese Anordnung des Gleitelementes ermöglicht eine einfache Herstellung der Führung für das Gleitelement sowie eine einfache Montage.

Vorteilhafterweise weist die Pendelbewegungsanordnung ein um eine Schaltachse schwenkbares Schaltelement auf. Das Schaltelement weist einen Betätigungsbereich auf, der ausserhalb eines äusseren Gehäuse teils angeordnet ist. Ferner ist an dem Schaltel e-ment ein Eingriffbereich ausgeformt, mit dem das Druckelement oder das Gleitelement in Eingriff steht. Durch ein derartiges Schaltelement kann ein bequemes Umschalten zwischen den verschiedenen Positionen des Druckstiftes sichergestellt werden. Zudem ist ein solches Schaltelement relativ einfach und stabil herstellbar.

Ferner ist günstig, dass das Schaltelement mindestens ein Festlegemittel aufweist. Hierdurch kann ein ungewolltes Umschalten zwischen verschiedenen Positionen des Druckelementes und damit eine ungewollte Verstellung der Pendelbewegung vermieden werden.

Von Vorteil ist, dass das Festlegemittel durch mindestens einen am Schaltelement ausgebildeten Wulst gebildet ist. An dem inneren Gehäuseteil sind mehrere Mulden ausgeformt. Je nach Position des Schaltelementes kann der Wulst in jeweils eine der Mulden einrasten. Der Wulst kann beispielsweise durch eine Rippe oder einen Zahn, der beispielsweise einen spitzen oder abgerundeten, dreiecksförmigen Querschnitt hat, gebildet sein. Hierdurch erhält man eine einfache Einrastvorrichtung, die eine sichere Festlegung des Druckstiftes in einer gewählten Position gewährleistet.

In einer bevorzugten Ausführungsform weist das Schaltelement einen Federbereich auf, an dem der Wulst ausgeformt ist. Ein solcher Federbereich kann beispielsweise durch einen länglichen, vom übrigen Schaltelement abstehenden Bereich gebildet sein, der an der Verbindung zum übrigen Schaltelement federt. Durch die federnden Eigenschaften des Federbereichs wird ein leichtes Verstellen bei gleichzeitig sicherem Verrasten der Einrastvorrichtung ermöglicht.

Ferner ist günstig, dass das Schaltelement in einer Ebene verschwenkbar ist, die parallel zur Auflagefläche eines Führungsschlittens in Normalstellung liegt. Unter Normalstellung wird hierbei die Stellung angesehen, in der das Sägeblatt quer zur Vorschubrichtung einen rechten Winkel mit der Auflagefläche des Führungsschlittens einschliesst. Hierdurch ist es möglich eine Durchtrittsöffnung für das Schaltelement am Gehäuse vorzusehen, die parallel zum Führungsschlitten liegt und sich somit gut in das Gesamtbild der Stichsäge einfügt. Zudem kann eine solche Durchtrittsöffnung ohne Schieber im Gusswerkzeug hergestellt werden.

Die Erfindung wird nachstehend anhand eines Ausführungsbeispieles näher erläutert. Es zeigen:
- Fig. 1: einen Vertikalschnitt durch das eingebaute Getriebe einer erfindungsgemässen Stichsäge,
- Fig. 2: eine perspektivische Vorderansicht des Getriebes mit Lagerschild und ausschnittsweiser Darstellung des Aussengehäuses,
- Fig. 3a: eine Ansicht der Unterseite des Getriebes bei maximalem Pendelhub,
- Fig. 3b: eine Rückansicht des Getriebes bei maximalem Pendelhub,
- Fig. 4a: eine Ansicht der Unterseite des Getriebes bei ausgeschaltetem Pendelhub und
- Fig. 4b: eine Rückansicht des Getriebes bei ausgeschaltetem Pendelhub.

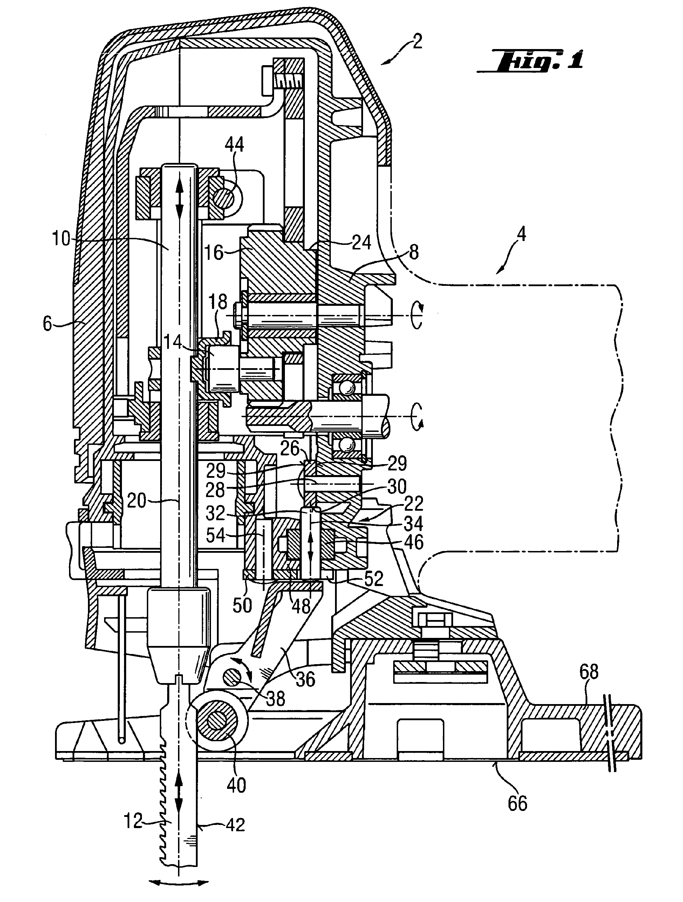

In den Fig. 1 bis 4 ist ein Getriebeteil 2 einer erfindungsgemässen Stichsäge 4 dargestellt. Im endmontierten Zustand der Stichsäge 4 ist das Getriebeteil 2 im Wesentlichen durch einen äusseren Gehäuseteil 6 und ein Lagerschild 8 begrenzt (siehe Fig. 1).

Das Getriebeteil 2 weist eine Hubstange 10 auf, an der ein Sägeblatt 12 befestigt werden kann. Zum Antrieb der Hubstange 10 dient ein Antriebsexcenter 14, der an einem Antriebszahnrad 16 angebracht ist und der in eine Kulissenführung 18 greift, die an der Hubstange 10 befestigt ist. Bei Rotation des Antriebszahnrades 16 wird die Hubstange 10 in Richtung einer Hubachse 20 hin- und herbewegt.

Ferner weist das Getriebeteil 2 eine Pendelbewegungsanordnung 22 auf. Der Antrieb der Pendelbewegungsanordnung 22 erfolgt über einen Pendelexcenter 24, der an der von der Hubstange 10 abgewandten Rückseite des Antriebszahnrades 16 angebracht ist und an dessen Umfangsseite ein freies Ende eines Wippelementes 26 anliegt. Im Betrieb wird dieses Wippelement 26 durch den Pendelexcenter 24 um eine Wippachse 28 hin- und herverschwenkt. Dabei spannt das Wippelement 26 in Richtung der Schwenkbewegung einen Schwenkraum auf, der durch zwei Ebenen begrenzt ist in denen die Seitenflächen 29 des Wippelements 26 liegen. Beim Verschwenken drückt das Wippelement 26 mit einer Druckfläche 30 wiederkehrend gegen ein stiftförmiges Druckelement 32. Dabei bewegt sich das Druckelement 32 in Richtung einer Bewegungsachse 34, die parallel zum Schwenkraum und innerhalb von diesem liegt, auf und ab.

An seinem unteren Ende liegt das Druckelement 32 am freien Ende eines Pendelelementes 36 an. Das Pendelelement 36 ist um eine Pendelachse 38 verschwenkbar und weist an einem zweiten Ende eine Rolle 40 auf, die an einer Rückseite 42 des Sägeblatts 12 anliegt. Durch die Auf- und Abbewegung des Druckelementes 32 wird das Pendelelement 36 um die Pendelachse 38 hin- und hergeschwenkt und drückt folglich wiederkehrend gegen die Rückseite 42 des Sägeblattes 12. Da die Hubstange um eine Auslenkachse 44 schwenkbar gelagert ist, führt der Druck der Rolle 40 gegen das Sägeblatt 12 dazu, dass dieses zusammen mit der Hubstange 10 wiederkehrend ausgelenkt wird. Somit wird die Hubbewegung der Hubstange 10 in Richtung der Hubachse 20 durch eine Pendelbewegung quer zur Hubachse 20 überlagert.

Zur Veränderung der Grösse dieser Auslenkung quer zur Hubachse 20 beziehungsweise zur vollständigen Abschaltung der Pendelbewegung ist vorgesehen, dass das Druckelement 32 axial verschieblich in einem Gleitelement 46 gelagert ist. Das Gleitelement 46 ist wiederum quer zur Bewegungsachse 34 als auch quer zur Wippachse 28 verschiebbar gelagert. Dabei liegt die Verschiebungsachse des Gleitelementes 46 innerhalb des Schwenkraumes des Wippelementes 26. Hierzu ist das Gleitelement 46 in einer Führung angeordnet, die durch das Lagerschild 8 und ein inneres Gehäuseteil 48 gebildet wird, die bei der endmontierten Stichsäge 4 aneinanderliegen.

Ein Schaltelement 50 weist einen durch eine längliche Einbuchtung geformten Eingriffsbereich 52 auf, mit dem das Druckelement 32 in Eingriff steht. Das Schaltelement 50 ist um eine Schaltachse 54 schwenkbar und ragt durch entsprechende Ausnehmungen am Lagerschild 8 und dem äusseren Gehäuseteil 6 hindurch aus dem Getriebeteil 2 heraus. An dem aus dem Getriebeteil 2 hervorstehenden Teil weist das Schaltelement einen schalterförmigen Betätigungsbereich 56 auf. Ferner weist das Schaltelement 50 einen Federbereich 58 in Form eines abstehenden Arms auf, an dessen freien Ende ein Wulst 60 ausgebildet ist. Das freie Ende des Federbereichs 58 drückt auf der Seite des Wulstes 60 gegen ein Rastelement 62, an dem mehrere Mulden 64 ausgeformt sind.

Um eine bestimmte Grösse der Pendelbewegung festzulegen, wird das Schaltelement 50 durch Verschiebung des Betätigungsbereiches 56 in eine vorbestimmte Position verbracht.

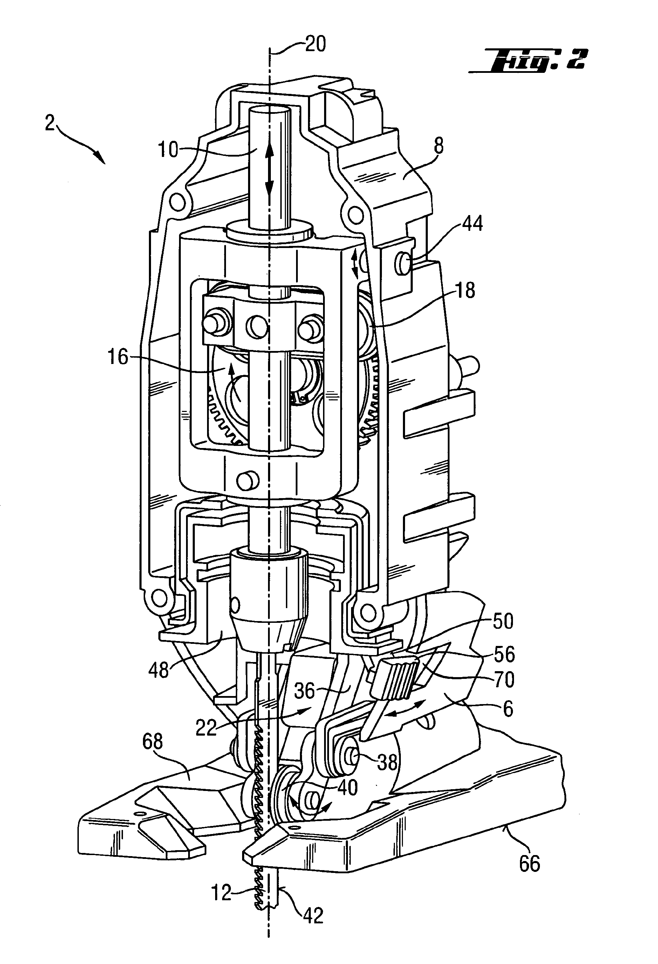

Das Schaltelement 50 wird dabei in einer Ebene verschwenkt, die parallel zu einer Auflagefläche 66 eines Führungsschlittens 68 in Normalstellung liegt. Dementsprechend ist die Ausnehmung, durch die das Schaltelement 50 durch das äussere Gehäuseteil 6 hindurch ragt, durch einen Gehäuseschlitz 70 gebildet, der ebenfalls eine parallele Ausrichtung zum Führungsschlitten 68 aufweist (siehe Fig. 2).

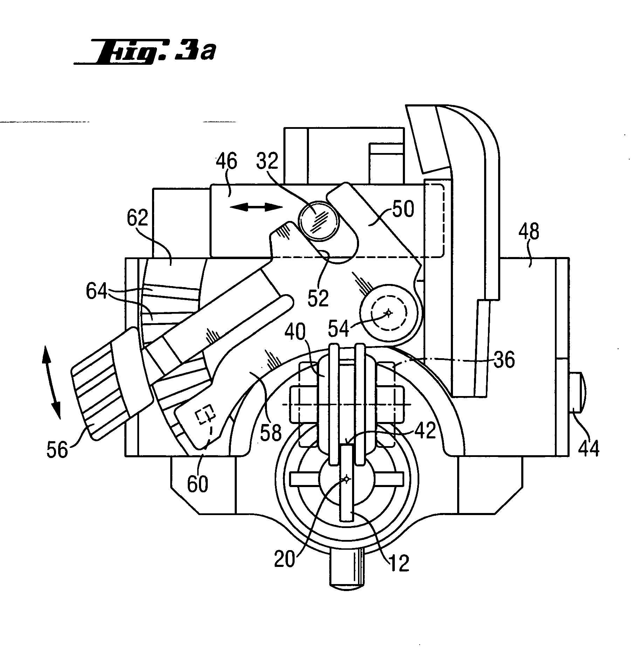

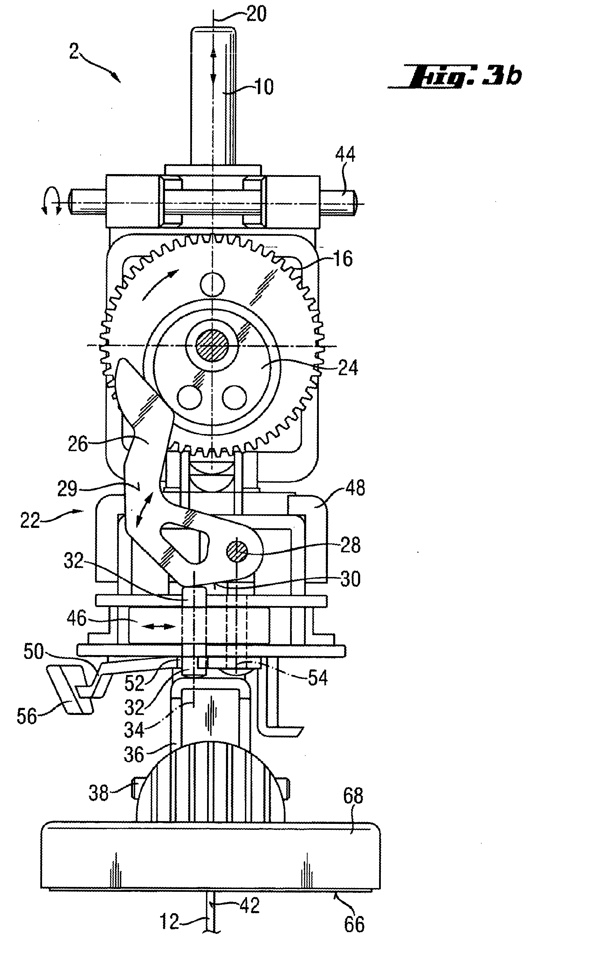

Durch das Verschwenken des Schaltelementes 50 wird das Druckelement 32 über den Eingriffsbereich 52 zusammen mit dem Gleitelement 46 verschoben (siehe Fig. 3a, 3b). Hierbei wird das Druckelement 32 bei gleich bleibender axialer Ausrichtung seitlich verschoben. Dabei verändert sich der Abstand des Kontaktbereiches zwischen Druckelement 32 und der Druckfläche 30 des Wippelementes 26 gegenüber der Wippachse 28. Je kürzer dieser Abstand zwischen dem Kontaktbereich und der Wippachse 28 ist, desto geringer wird das Druckelement 32 durch das Wippelement 26 in Richtung der Bewegungsachse 34 ausgelenkt und desto geringer ist folglich auch die Auslenkung, die die Hubstange 10 durch die Rolle 40 des Pendelelementes 36 erfährt.

Sobald das Schaltelement 50 in eine gewünschte Position verbracht ist, wird der Wulst 60 durch die federnde Wirkung des Federbereichs 58 in die in dieser Position ausgeformte Mulde 64 des Rastelementes 62 gedrückt. Auf diese Weise ist das Schaltelement 50 gegen ungewolltes Verstellen geschützt.

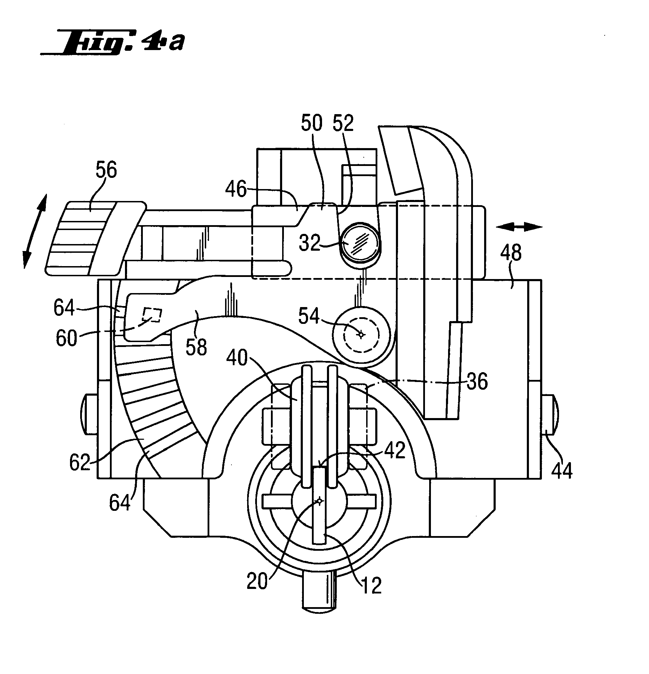

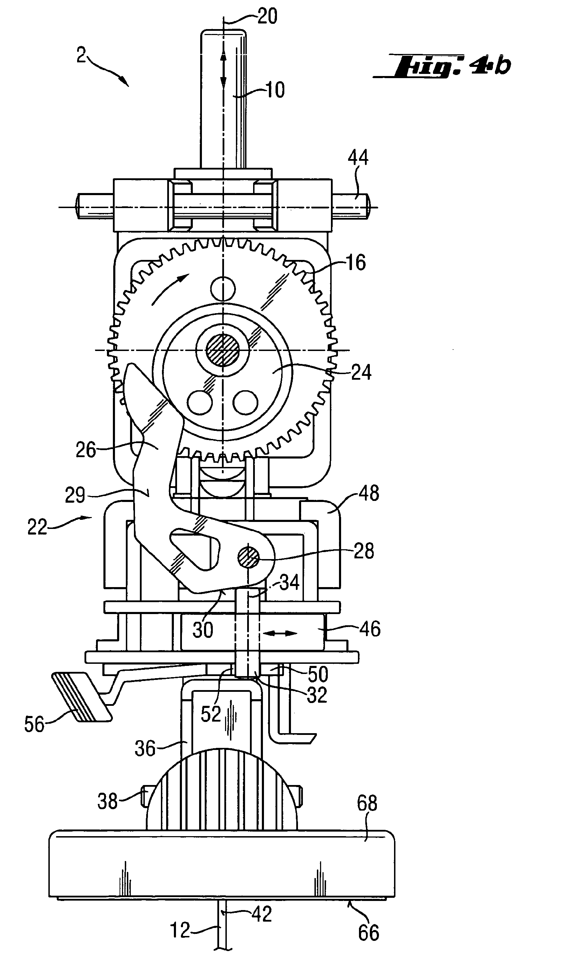

In den Fig. 4a und 4b ist eine Position des Schaltelementes 50 gezeigt, bei der das Druckelement soweit verschoben ist, dass die Bewegungsachse 34 die Wippachse 28 schneidet. Dies hat zur Folge, dass das Verschwenken des Wippelementes 26 im Betrieb keinerlei Auslenkung des Druckelementes 32 bewirkt. Somit ist in dieser Position des Schaltelementes 50 beziehungsweise des Druckelementes 32 die Pendelbewegung der Hubstange 10 vollständig abgeschaltet.

## Patentansprüche

1. Stichsäge (4) mit einer Hubstange (10), die im Betrieb eine Hubbewegung in Richtung einer Hubachse (20) ausführt, und einer Pendelbewegungsanordnung (22), durch die die Hubbewegung mit einer quer zur Hubachse (20) erfolgenden und in ihrer Grösse verstellbaren Pendelbewegung überlagerbar ist, wobei die Pendelbewegungsanordnung (22) ein Wippelement (26) aufweist, das im Betrieb um eine Wippachse (28) hin- und herverschwenkt wird und dabei ein Druckelement (32) entlang einer Bewegungsachse (34) hin- und herbewegt, über das ein Pendelelement (36) um eine Pendelachse (38) in eine Bewegung versetzt werden kann, die eine wiederkehrende Auslenkung der Hubstange (10) bewirkt, **dadurch gekennzeichnet, dass** das Druckelement (32) in einem senkrecht zur Bewegungsachse (34) linear verschiebbaren Lager gehalten ist und in mindestens zwei Positionen mit unterschiedlichen Abständen zur Wippachse (28) verbracht werden kann.

2. Stichsäge nach Anspruch 1, **dadurch gekennzeichnet, dass** die Bewegungsachse (34) in einer der Positionen durch die Wippachse (28) geht.

3. Stichsäge nach Anspruch 1 oder 2, **dadurch gekennzeichnet, dass** das verschiebbare Lager durch ein Gleitelement (46) gebildet ist, das quer zur Wippachse (28) geführt ist.

4. Stichsäge nach Anspruch 3, **dadurch gekennzeichnet, dass** das Gleitelement (46) zwischen einem Lagerschild (8) und einem inneren Gehäuseteil (48) der Stichsäge (4) gelagert ist.

5. Stichsäge nach einem der Ansprüche 1 bis 4, **dadurch gekennzeichnet, dass** die Pendelbewegungsanordnung (22) ein um eine Schaltachse (54) schwenkbares Schaltelement (50) aufweist, das einen Betätigungsbereich (56), der aus einem äusseren Gehäuseteil (6) herausragt, und einen Eingriffsbereich (52), mit dem das Druckelement (32) oder das Gleitelement (46) zusammenwirkt, aufweist.

6. Stichsäge nach Anspruch 5, **dadurch gekennzeichnet, dass** das Schaltelement (50) mindestens ein Festlegemittel aufweist.

7. Stichsäge nach Anspruch 6, **dadurch gekennzeichnet, dass** das Festlegemittel durch mindestens einen am Schaltelement (50) ausgebildeten Wulst (60) gebildet ist, der mit jeweils einem von mehreren Mulden (64), die am inneren Gehäuseteil (48) ausgebildet sind, in Eingriff gebracht werden kann.

8. Stichsäge nach Anspruch 7, **dadurch gekennzeichnet, dass** das Schaltelement (50) einen Federbereich (58) aufweist, an dem der Wulst (60) ausgeformt ist.

9. Stichsäge nach Anspruch 5, **dadurch gekennzeichnet, dass** das Schaltelement (50) in einer Ebene verschwenkbar ist, die senkrecht zur Hubachse (20) steht.

## Claims

1. Sabre saw (4) with a lifter rod (10) which, during operation, performs a lifting movement in the direction of a lifting axis (20), and with a pendulum movement device (22) by means of which the lifting movement can be superimposed with a pendulum movement that takes place transversely to the lifting axis (20) and is variable in size, wherein the pendulum movement device (22) exhibits a rocking element (26) which, during operation, is swivelled backwards and forward about a rocking axis (18), and wherein a pressure element (32) moves backwards and forwards along an axis of movement (34), by means of which element a pendulum element (36) can be displaced about a pendulum axis (38) into a movement which effects a recurring deflection of the lifter rod (10), **characterised in that** the pressure element (32) is retained in a bearing that is linearly displaceable vertically to the axis of movement and can be brought into at least two positions at different distances from the rocking axis (28)

2. Sabre saw according to Claim 1, **characterised in that** the axis of movement (34) moves into one of the positions through the rocking axis (28).

3. Sabre saw according to Claim 1 or 2, **characterised** I that the displaceable bearing is formed by a sliding element (46) which is guided transversely to the rocking axis (18).

4. Sabre saw according to Claim 3, **characterised in that** the sliding element (46) is mounted between a bearing end plate (8) and an inner housing part (48) of the sabre saw (4).

5. Sabre saw according to one of Claims 1 to 4, **characterised in that** the pendulum movement device (22)) exhibits a switching element (50) that can be swivelled about a switching axis (54), which element exhibits an actuating region (56), which projects from an outer housing part (6) and an engaging region (52) with which the pressure element (32) or the sliding element (46) interacts.

6. Sabre saw according to Claim 5, **characterised in that** the switching element (50) exhibits at least one fixing means.

7. Sabre saw according to Claim 6, **characterised in that** the fixing means is formed by at least one bead (60) formed on the switching element (50), which bead can be brought into engagement with each of a plurality of depressions (64) which are formed on the inner housing.part (48).

8. Sabre saw according to Claim 7, **characterised in that** the switching element (50) exhibits a spring region (58) on which the depression (60) is formed.

9. Sabre saw according to Claim 5, **characterised in that** the switching element (50) can be swivelled in a plane which is perpendicular to the lifting axis (20).

## Revendications

1. Scie sauteuse (4) avec une tige de levage (10) qui, en fonctionnement, effectue un mouvement de levage dans la direction d'un axe de levage (20), et avec un agencement de mouvement pendulaire (22) qui permet de superposer au mouvement de levage un mouvement pendulaire transversal à l'axe de levage (20) et à amplitude réglable, l'agencement de mouvement pendulaire (22) comportant un élément basculant (26) qui, en fonctionnement, pivote en va-et-vient autour d'un axe de basculement (28) en déplaçant en va-et-vient, le long d'un axe de déplacement (34), un élément de pression (32) qui permet d'imprimer à un élément pendulaire (36) un mouvement autour d'un axe pendulaire (38), lequel provoque une déviation récurrente de la tige de levage (10), **caractérisée en ce que** l'élément de pression (32) est logé dans un palier apte à coulisser de manière linéaire perpendiculairement à l'axe de déplacement (34) et peut être amené dans au moins deux positions présentant des distances différentes par rapport à l'axe de basculement (28).

2. Scie sauteuse selon la revendication 1, **caractérisée en ce que**, dans une des positions, l'axe de déplacement (34) coupe l'axe de basculement (28).

3. Scie sauteuse selon la revendication 1 ou 2, **caractérisée en ce que** le palier coulissant est formé par un élément glissant (46) qui est guidé transversalement à l'axe de basculement (28).

4. Scie sauteuse selon la revendication 3, **caractérisée en ce que** l'élément glissant (46) est monté entre un flasque-palier (8) et une partie intérieure de carter (48) de la scie sauteuse (4).

5. Scie sauteuse selon une des revendications 1 à 4, **caractérisée en ce que** l'agencement de mouvement pendulaire (22) comporte un élément de commutation (50) qui est apte à pivoter autour d'un axe de commutation (54) et qui comporte une zone d'actionnement (56), laquelle sort d'une partie extérieure de carter (6), et une zone de prise (52) avec laquelle coopère l'élément de pression (32) ou l'élément glissant (46).

6. Scie sauteuse selon la revendication 5, **caractérisée en ce que** l'élément de commutation (50) comporte au moins un élément de blocage.

7. Scie sauteuse selon la revendication 6, **caractérisée en ce que** l'élément de blocage est formé par au moins un bourrelet (60) qui est disposé sur l'élément de commutation (50) et qui peut être amené en prise avec chacune d'une pluralité de cuvettes (64) ménagées sur la partie intérieure de carter (48).

8. Scie sauteuse selon la revendication 7, **caractérisée en ce que** l'élément de commutation (50) comporte une zone élastique (58) sur laquelle le bourrelet (60) est surmoulé.

9. Scie sauteuse selon la revendication 5, **caractérisée en ce que** l'élément de commutation (50) peut pivoter dans un plan perpendiculaire à l'axe de levage (20).
